# DEMANDE DE BREVET EUROPEEN

(11) **EP 1 773 010 A1**
(43) Date de publication de la demande: **11.04.2007**
(21) Numéro de dépôt: 06121897.0
(22) Date de dépôt: 06.10.2006
(51) Int. Cl.: H04L 12/56, H04Q 7/38

(54) **Procédé pour améliorer les transferts inter-cellulaires dans les systèmes cellulaires de radiocommunications mobiles**

(30) Priorité: 10.10.2005 FR 0553064
(71) Demandeur: EVOLIUM SAS, 75008 Paris (FR)
(72) Inventeur: Drevon, Nicolas, 75016, PARIS (FR)
(74) Mandataire: El Manouni, Josiane

(57) **Abrégé**

Un des objets de la présente invention est un procédé pour améliorer les transferts inter-cellulaires dans les systèmes cellulaires de radiocommunications mobiles, procédé comportant au moins une étape dans laquelle une entité de réseau de radiocommunications mobiles transmet à une autre entité de réseau de radiocommunications mobiles, pour un transfert intercellulaire d'une première cellule dans laquelle un ensemble de services simultanés par utilisateur sont supportés, vers une deuxième cellule dans laquelle un sous-ensemble dudit ensemble de services simultanés par utilisateur sont supportés, au moins une information apte à indiquer une simultanéité de services.

## Description

La présente invention concerne d'une manière générale les systèmes de radiocommunications mobiles.

D'une manière générale, les systèmes de radiocommunications mobiles font l'objet de normalisation, et pour plus d'informations on pourra se reporter aux normes correspondantes, publiées par les organismes de normalisation correspondants.

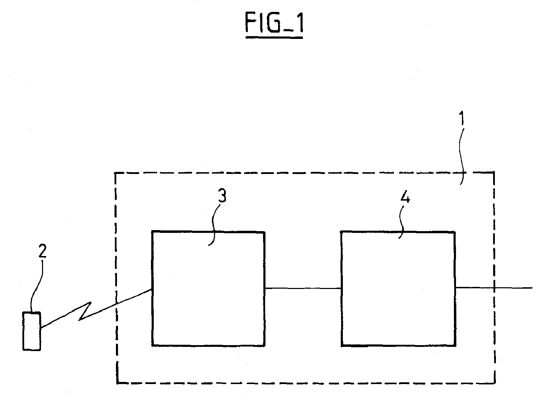

L'architecture générale d'un tel système est rappelée brièvement en relation avec la figure 1. Un tel système comporte un réseau de radiocommunications mobiles 1 communiquant avec des terminaux mobiles 2 et avec des réseaux extérieurs (non illustrés spécifiquement). Le réseau 1 comporte lui-même un réseau d'accès radio 3 (ou RAN, pour « Radio Access Network ») chargé principalement de la transmission et de la gestion des ressources radio sur l'interface radio entre le réseau et les terminaux mobiles, et un réseau coeur 4 (ou CN, pour « Core Network ») chargé principalement du routage et de la gestion des communications.

Les évolutions des besoins et de la technologie conduisent généralement à distinguer différents types de technologies d'accès radio et/ou de réseaux d'accès radio. A titre d'exemple de technologies d'accès radio et/ou de réseaux d'accès radio, on peut citer : TDMA (« Time Division Multiple Access »), W-CDMA (« Wideband - Code Division Multiple Access »), TD-SCDMA (« Time Division - Synchronous Code Division Multiple Access », OFDM (« Orthogonal Frequency Division Multiple Access »), I-WLAN (« Interworking Wireless Local Access Network », GAN (« Generic Access Network »), UMA (« Unlicensed Mobile Access »), ...etc.

D'une manière générale, on peut distinguer différents types de technologies d'accès radio et/ou de réseaux d'accès radio, suivant qu'ils sont ou non capables de supporter plusieurs services simultanés par utilisateur, c'est-à-dire suivant qu'ils sont ou non capables de traiter plusieurs supports d'accès radio (ou RAB, pour « Radio Access Bearer ») en parallèle. A titre d'exemple de services simultanés, on peut citer notamment des services de voix et des services de données, ou encore des services de type circuit et des services de type paquet.

A titre d'exemple de systèmes capables de supporter plusieurs services simultanés par utilisateur, on peut citer notamment l'UMTS (« Universal Mobile Telecommunication System »).

A titre d'exemple de systèmes non capables de supporter plusieurs services simultanés par utilisateur, on peut citer notamment le GSM (« Global System for Mobile communication ») dans certains cas.

En outre, dans le cas de systèmes tels que notamment le GSM/GPRS (« Global System for Mobile communication / General Packet Radio Service »), il est possible d'utiliser des fonctionnalités additionnelles, telles que notamment la fonctionnalité DTM (« Dual Transfer Mode ») permettant de supporter simulanément des services circuit et des services paquet pour un même utilisateur. Il convient de souligner que le terminal de l'utilisateur doit aussi supporter la fonctionnalité DTM pour que la simultanéité de services puisse être opérationnelle.

Ainsi, d'une manière générale, dans les systèmes cellulaires de radiocommunications mobiles, on peut faire une distinction entre des cellules dans lesquelles plusieurs services simultanés par utilisateur sont supportés (correspondant au cas de cellules et de terminaux supportant des technologies d'accès radio et/ou des fonctionnalités additionnelles appropriées), et des cellules dans lesquelles plusieurs services simultanés par utilisateur ne sont pas supportés (correspondant au cas de cellules ou de terminaux ne supportant pas des technologies d'accès radio et/ou des fonctionnalités additionnelles appropriées).

On rappelle en outre que d'une manière générale, dans ces systèmes cellulaires, des mécanismes de changement de cellule sont prévus. Dans ce qui suit, on s'intéresse plus particulièrement aux mécanismes de transfert inter-cellulaire ou « handover ».

Par ailleurs, dans des systèmes comportant des cellules capables de supporter plusieurs services simultanés par utilisateur et des cellules non capables de supporter plusieurs services simultanés par utilisateur, des transferts inter-cellulaires peuvent être prévus entre ces différents types de cellules.

Dans ce contexte, ainsi que l'a observé le demandeur, des problèmes peuvent se poser, qui pour simplifier peuvent être illustrés au moyen d'un exemple.

On considère par exemple le cas de handover inter-système, d'une cellule UMTS vers une cellule GSM/GPRS.

On rappelle que dans un système de type GSM/GPRS, le terminal mobile est appelé MS (« Mobile Station »), le réseau d'accès radio (ou RAN) est composé de sous-ensembles appelés BSS (« Base Station Subsystem »), et le réseau coeur (ou CN) comporte notamment, pour le domaine lié à la commutation de circuit (ou « CS Domain » en anglais), des éléments de réseau de type 2G-MSC (où 2G est utilisé pour « 2^{nd} Generation » et MSC est utilisé pour « Mobile Switching center ») et, pour le domaine lié à la commutation de paquet (ou « PS Domain » en anglais), des éléments de réseau de type 2G-SGSN (où 2G est utilisé pour « 2^{nd} Generation » et SGSN est utilisé pour « Serving GPRS Support Node »).

On rappelle que dans un système de type UMTS, le terminal mobile est appelé UE (« User Equipment »), le réseau d'accès radio (ou RAN) est appelé UTRAN (« UMTS Terrestrial Radio Access Network »), et le réseau coeur (ou CN) comporte notamment, pour le domaine lié à la commutation de circuit (ou « CS Domain » en anglais), des éléments de réseau de type 3G- MSC (où 3G est utilisé pour « 3^{rd} Generation » et MSC est utilisé pour « Mobile Switching center ») et, pour le domaine lié à la commutation de paquet (ou « CS Domain » en anglais), des éléments de réseau de type 3G-SGSN (où 3G est utilisé pour « 3^{rd} Generation » et SGSN est utilisé pour «Serving GPRS Support Node »).

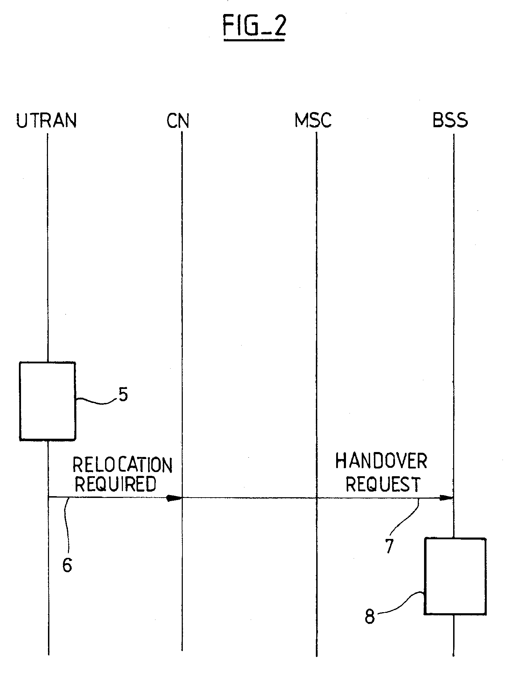

Les principales étapes d'un handover inter-système, par exemple d'une cellule UMTS vers une cellule GSM/GPRS, sont rappelées sur la figure 2.

Dans une étape 5, une décision de « handover » est prise par l'UTRAN.

Le procédé comporte ensuite un ensemble d'étapes incluant, entre autres :
- une étape 6 correspondant à l'envoi par l'UTRAN au CN d'un message « Relocation Required »,
- une étape 7 correspondant à l'envoi par le MSC au BSS d'un message « Handover Request »,
- une étape 8 de décision d'allocation de ressources, par le BSS, dans la cellule cible.

On rappelle que dans un système tel que notamment l'UMTS, une procédure de relocalisation est initiée par l'envoi par l'entité de réseau d'accès radio en charge de la communication (ou SRNC (pour « Serving Radio Network Controller ») à l'entité de réseau coeur CN appropriée, d'un message « Relocation Required », selon le protocole RANAP (« Radio Access Network Application Part ») tel que défini dans la spécification 3GPP TS 25.413.

Comme illustré au moyen de l'étape 6 de la figure 2, la procédure d'envoi d'un message « Relocation Required » est utilisée pour initier l'exécution d'un handover intersystème, de l'UMTS vers un autre système tel que notamment le GSM/GPRS.

On rappelle également que dans un système tel que notamment le GSM/GPRS, dans le cas de handover « externe », c'est-à-dire tel que la cellule initiale et la cellule cible ne sont pas contrôlées par un même élément du réseau d'accès radio, un message « Handover Request » est transmis de l'entité de réseau coeur (MSC) en charge de la cellule cible vers l'entité de réseau d'accès radio (BSS) en charge de la cellule cible, à la suite de la réception par l'entité de réseau coeur en charge de la cellule initiale d'un message « Handover Required » transmis par l' entité de réseau d'accès radio en charge de la cellule initiale, selon le protocole BSSMAP (« Base Station Subsystem Management Application Part ») tel que défini dans la spécification 3GPP TS 48.008.

Comme rappelé au moyen de l'étape 7 de la figure 2, la procédure d'envoi d'un message « Handover Request » est utilisée pour l'exécution d'un handover inter-système vers le GSM/GPRS, à partir d'un autre système tel que l'UMTS, à la suite de la réception d'un message « Relocation Required » tel que rappelé précédemment.

Ainsi que l'a observé le demandeur, un nouveau problème se pose dans ce contexte, qui peut être exposé par exemple de la manière suivante.

Lorsque, par exemple pour des raisons de manque de couverture UMTS, un handover vers une cellule GSM/GPRS est décidé par l'UTRAN, dans l'état actuel de la norme il n'y a pas de moyen pour le BSS de savoir si l'utilisateur est engagé simultanément dans plusieurs services, par exemple dans un appel circuit et dans une ou plusieurs sessions paquet, ou seulement dans un appel circuit. En effet, selon les spécifications 3GPP TS 23.009 et 3GPP TS 25.413, l'UTRAN initie un handover pour une connexion circuit (ou « CS handover »), et, si l'utilisateur est engagé simultanément dans une ou plusieurs sessions paquet, la ou les sessions paquet (ou « PS sessions ») sont reprises à l'initiative du terminal mobile dans le réseau GSM/GPRS.

Mais lorsque le terminal mobile et/ou le BSS ne supportent pas la fonctionnalité DTM, la ou les sessions paquet ne peuvent normalement pas être reprises avant de terminer l'appel circuit. La ou les sessions paquet peuvent cependant être reprises avant de terminer la connexion circuit si la couverture UMTS est ensuite retrouvée, et si un handover vers l'UMTS est alors décidé par le BSS.

Mais comme indiqué précédemment, dans l'état actuel de la norme, le BSS ne sait pas si si l'utilisateur est engagé seulement dans un appel circuit ou simultanément dans un appel circuit et dans une ou plusieurs sessions paquet. Par conséquent, la décision prise par le BSS (pour ce handover vers l'UMTS) n'est pas optimale. Par exemple, si l'utilisateur est engagé seulement dans un appel circuit, il peut être préférable de laisser le terminal mobile dans le réseau GSM pour minimiser le nombre de handovers. Par contre, si l'utilisateur est engagé simultanément dans un appel circuit et dans une ou plusieurs sessions paquet, il peut être préférable d'effectuer un handover vers l'UMTS pour permettre à l'utilisateur de retrouver simultanément l'appel circuit et la ou les sessions paquet.

En d'autres termes, dans l'état actuel de la norme, le cas de handover inter-système n'est pas traité de manière optimale, notamment pour les raisons exposées ci-dessus au moyen d'un exemple, et il en résulte une dégradation de performances, notamment en termes de qualité de service.

Ainsi que l'a également observé le demandeur, ce type de problème se pose pour tout handover d'une première cellule dans laquelle un ensemble de services simultanés par utilisateur sont supportés, vers une deuxième cellule dans laquelle un sous-ensemble dudit ensemble de services simultanés par utilisateur sont supportés.

La présente invention a notamment pour but de résoudre tout ou partie de ces problèmes, et/ou d'éviter tout ou partie de ces inconvénients. Plus généralement, un des buts de la présente invention est d'améliorer les performances et la qualité de service dans ces systèmes.

Un des objets de la présente invention est un procédé pour améliorer les transferts inter-cellulaires dans les systèmes cellulaires de radiocommunications mobiles, procédé comportant au moins une étape dans laquelle une entité de réseau de radiocommunications mobiles transmet à une autre entité de réseau de radiocommunications mobiles, pour un transfert intercellulaire d'une première cellule dans laquelle plusieurs services simultanés par utilisateur sont supportés, vers une deuxième cellule dans laquelle plusieurs services simultanés par utilisateur ne sont pas supportés, au moins une information apte à indiquer une simultanéité de services.

Plus généralement, un des objets de la présente invention est un procédé pour améliorer les transferts inter-cellulaires dans les systèmes cellulaires de radiocommunications mobiles, procédé comportant au moins une étape dans laquelle une entité de réseau de radiocommunications mobiles transmet à une autre entité de réseau de radiocommunications mobiles, pour un transfert intercellulaire d'une première cellule dans laquelle un ensemble de services simultanés par utilisateur sont supportés, vers une deuxième cellule dans laquelle un sous-ensemble dudit ensemble de services simultanés par utilisateur sont supportés, au moins une information apte à indiquer une simultanéité de services.

Un autre objet de la présente invention est une entité de réseau d'accès radio pour un réseau de radiocommunications mobiles, comportant des moyens pour mettre en oeuvre un procédé suivant l'invention.

Un autre objet de l'invention est ainsi une entité de réseau d'accès radio pour réseau de radiocommunications mobiles, comportant des moyens pour transmettre à une entité de réseau coeur, pour un transfert intercellulaire d'une première cellule capable de supporter plusieurs services simultanés par utilisateur, vers une deuxième cellule non capable de supporter plusieurs services simultanés par utilisateur, au moins une information apte à indiquer une simultanéité de services.

Plus généralement, un autre objet de l'invention est ainsi une entité de réseau d'accès radio pour réseau de radiocommunications mobiles, comportant des moyens pour transmettre à une entité de réseau coeur, pour un transfert intercellulaire d'une première cellule capable de supporter un ensemble de services simultanés par utilisateur, vers une deuxième cellule capable de supporter un sous-ensemble dudit ensemble de services simultanés par utilisateur, au moins une information apte à indiquer une simultanéité de services.

Un autre objet de l'invention est ainsi une entité de réseau d'accès radio pour réseau de radiocommunications mobiles, comportant des moyens pour utiliser au moins une information reçue d' une entité de réseau coeur, pour un transfert intercellulaire d'une première cellule capable de supporter plusieurs services simultanés par utilisateur, vers une deuxième cellule non capable de supporter plusieurs services simultanés par utilisateur, et apte à indiquer une simultanéité de services, pour décider ensuite d'un éventuel transfert intercellulaire vers une cellule apte à supporter plusieurs services simultanés par utilisateur.

Plus généralement, un autre objet de l'invention est ainsi une entité de réseau d'accès radio pour réseau de radiocommunications mobiles, comportant des moyens pour utiliser au moins une information reçue d' une entité de réseau coeur, pour un transfert intercellulaire d'une première cellule capable de supporter un ensemble de services simultanés par utilisateur, vers une deuxième cellule capable de supporter un sous-ensemble dudit ensemble de services simultanés par utilisateur, et apte à indiquer une simultanéité de services, pour décider ensuite d'un éventuel transfert intercellulaire vers une cellule apte à supporter un ensemble de services simultanés par utilisateur.

Un autre objet de la présente invention est une entité de réseau coeur pour un réseau de radiocommunications mobiles, comportant des moyens pour mettre en oeuvre un procédé suivant l'invention.

Un autre objet de l'invention est ainsi une entité de réseau coeur pour réseau de radiocommunications mobiles, comportant des moyens pour transmettre à une entité de réseau d'accès radio, pour un transfert intercellulaire d'une première cellule capable de supporter plusieurs services simultanés par utilisateur, vers une deuxième cellule non capable de supporter plusieurs services simultanés par utilisateur, au moins une information apte à indiquer une simultanéité de services.

Plus généralement, un autre objet de l'invention est ainsi une entité de réseau coeur pour réseau de radiocommunications mobiles, comportant des moyens pour transmettre à une entité de réseau d'accès radio, pour un transfert intercellulaire d'une première cellule capable de supporter un ensemble de services simultanés par utilisateur, vers une deuxième cellule capable de supporter un sous-ensemble dudit ensemble de services simultanés par utilisateur, au moins une information apte à indiquer une simultanéité de services.

Un autre objet de la présente invention est un système de radiocommunications mobiles, comportant au moins une entité de réseau de radiocommunications mobiles suivant l'invention.

D'autres objets et caractéristiques de la présente invention apparaîtront à la lecture de la description suivante d'exemples de réalisation, faite en relation avec les figures ci-annexées dans lesquelles:
- la figure 1 est destinée à rappeler l'architecture générale d'un système cellulaire de radiocommunications mobiles,
- la figure 2 est destinée à illustrer un exemple de procédé de handover inter-système suivant l'art antérieur,
- la figure 3 est destinée à illustrer un exemple de procédé de handover inter-système suivant l'invention.

L'invention sera plus particulièrement décrite dans ce qui suit, à titre d'exemple, pour le cas de handover inter-système d'une cellule UMTS vers une cellule GSM/GPRS, et pour le cas de services simultanés, correspondant à des services de type circuit et à des services de type paquet. Cependant, comme indiqué précédemment, l'invention n'est pas limitée à un tel exemple.

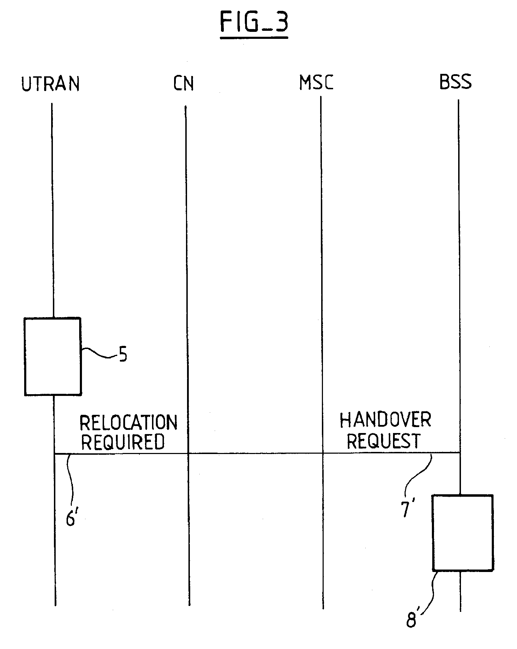

Un exemple de procédé suivant l'invention est illustré sur la figure 3. Des éléments pouvant être communs aux figures 2 et 3 ont en l'occurrence été notés avec les mêmes références.

Le procédé illustré sur la figure 3 comporte une étape 6' qui diffère de l'étape 6 de la figure 2 en ce qu'une information, notée par exemple «PS session indication » apte à indiquer si l'utilisateur est engagé seulement dans un appel circuit ou simultanément dans un appel circuit et dans une ou plusieurs sessions paquet, est transmise dans le message RANAP « Relocation Required . Cette information est relayée par le réseau coeur vers le BSS, dans le message BSSMAP « Handover Request », comme illustré dans l'étape 7' de la figure 3.

Par exemple, cette information pourrait être contenue dans un élément d'information (ou IE, pour « Information Element ») tel que par exemple l'IE « Old BSS to New BSS information », ou tout autre conteneur permettant de transférer des informations de UTRAN vers BSS de manière transparente au réseau coeur. L'IE « Old BSS to New BSS information » est, pour le cas de handover inter-système, contenu dans le message « Relocation Required » tel que défini dans la spécification 3GPP TS 25.413, et dans le message « Handover Request » tel que défini dans la spécification 3GPP TS 48.008.

Dans l'étape notée 8' sur la figure 3, le BSS est alors capable de prendre une meilleure décision au sujet d'un éventuel handover vers l'UMTS dans le cas où la couverture UMTS est ensuite retrouvée.

La présente invention a également pour objet une entité de réseau d'accès radio, comportant des moyens pour mettre en oeuvre un procédé suivant l'invention.

La présente invention a également pour objet une entité de réseau coeur, comportant des moyens pour mettre en oeuvre un procédé suivant l'invention.

Par exemple, pour le cas de handover inter-système, d'une première cellule correspondant à une cellule UMTS vers une deuxième cellule correspondant à une cellule GSM/GPRS, et pour le cas de services simultanés correspondant à des services de type circuit et à des services de type paquet :
- dans le système UMTS, une entité de réseau d'accès radio ou UTRAN, telle que notamment une entité de type RNC (« Radio Network Controller »), en charge de la première cellule, peut comporter des moyens pour transmettre à une entité de réseau coeur de ce système, telle que notamment une entité de type 3G-MSC (« 3^{rd} Génération - Mobile Switching Center »), en charge de la première cellule, au moins une information apte à indiquer si l'utilisateur est engagé seulement dans un appel circuit ou simultanément dans un appel circuit et dans une ou plusieurs sessions paquet. De tels moyens peuvent notamment comporter des moyens pour transmettre une telle information, dans un message « Relocation Required » tel que défini dans la spécification 3GPP TS 25.413, notamment dans un élément d'information d'un tel message correspondant à l'IE « Old BSS to New BSS information » ou tout autre conteneur permettant de transférer des informations de UTRAN vers BSS de manière transparente au réseau coeur.

Par exemple, pour le cas de handover, d'une première cellule correspondant à une cellule GSM/GPRS apte à supporter plusieurs services simultanés par utilisateur, vers une deuxième cellule correspondant à une cellule GSM/GPRS, et pour le cas de services simultanés correspondant à des services de type circuit et à des services de type paquet :
- dans le système GSM/GPRS, une entité de réseau d'accès radio ou BSS, telle que notamment une entité de type BSC (« Base Station Controller »), en charge de la première cellule, peut comporter des moyens pour transmettre à une entité de réseau coeur de ce système, telle que notamment une entité de type 2G-MSC (« 2nd Génération - Mobile Switching Center »), au moins une information apte à indiquer si l'utilisateur est engagé seulement dans un appel circuit ou simultanément dans un appel circuit et dans une ou plusieurs sessions paquet. De tels moyens peuvent notamment comporter des moyens pour transmettre une telle information dans un message « Handover Required » tel que défini dans la spécification 3GPP TS 48.008, notamment dans un élément d'information d'un tel message correspondant à l'IE « Old BSS to New BSS information ».

Par exemple, pour le cas de handover, d'une première cellule pouvant correspondre à une cellule UMTS ou à une cellule GSM/GPRS apte à supporter plusieurs services simultanés par utilisateur, vers une deuxième cellule correspondant à une cellule GSM/GPRS, et pour le cas de services simultanés correspondant à des services de type circuit et à des services de type paquet :
- dans le système GSM/GPRS, une entité de réseau coeur, telle que notamment une entité de type 2G-MSC (« 2^{nd} Génération - Mobile Switching Center »), en charge de la deuxième cellule, peut comporter, notamment, des moyens pour transmettre à une entité de réseau d'accès radio ou BSS, telle que notamment une entité de type BSC (« Base Station Controller »), en charge de la deuxième cellule, au moins une information apte à indiquer si l'utilisateur est engagé seulement dans un appel circuit ou simultanément dans un appel circuit et dans une ou plusieurs sessions paquet. De tels moyens peuvent notamment comporter des moyens pour transmettre une telle information dans un message « Handover Request», notamment dans un élément d'information d'un tel message correspondant à l'IE « Old BSS to New BSS information» ou tout autre conteneur permettant de transférer des informations de UTRAN vers BSS de manière transparente au réseau coeur.

Par exemple, pour le cas de handover d'une première cellule pouvant correspondre à une cellule UMTS ou à une cellule GSM/GPRS apte à supporter plusieurs services simultanés par utilisateur, vers une deuxième cellule correspondant à une cellule GSM/GPRS, et pour le cas de services simultanés correspondant à des services de type circuit et à des services de type paquet :
- dans le système GSM/GPRS, une entité de réseau d'accès radio ou BSS, telle que notamment une entité de type BSC (« Base Station Controller »), en charge de la deuxième cellule, peut comporter des moyens pour utiliser au moins une information reçue d' une entité de réseau coeur telle que notamment une entité de type 2G-2^{nd} Generation - Mobile Switching Center »), en charge de la deuxième cellule, et apte à indiquer si l'utilisateur est engagé seulement dans un appel circuit ou simultanément dans un appel circuit et dans une ou plusieurs sessions paquet, pour décider ensuite d'un éventuel handover vers une cellule apte à supporter plusieurs services simultanés par utilisateur.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour améliorer les transferts inter-cellulaires dans les systèmes cellulaires de radiocommunications mobiles, procédé comportant au moins une étape dans laquelle une entité de réseau de radiocommunications mobiles transmet à une autre entité de réseau de radiocommunications mobiles, pour un transfert intercellulaire d'une première cellule dans laquelle un ensemble de services simultanés par utilisateur sont supportés, vers une deuxième cellule dans laquelle un sous-ensemble dudit ensemble de services simultanés par utilisateur sont supportés, au moins une information apte à indiquer une simultanéité de services.

2. Procédé selon la revendication 1, comportant, pour le cas d'une première cellule de type UMTS, respectivement de type GSM/GPRS supportant un ensemble de services simultanés par utilisateur, au moins une étape dans laquelle une entité de réseau d'accès radio en charge de la première cellule transmet à une entité de réseau coeur en charge de la première cellule, dans un message de type « Relocation Required » tel que défini dans le protocole RANAP, respectivement de type « Handover Required » tel que défini dans le protocole BSSMAP, un élément d'information contenant une information apte à indiquer une simultanéité de services.

3. Procédé selon la revendication 2, dans lequel ledit élement d'information correspond à l'IE « Old BSS to new BSS information » ou tout autre conteneur permettant de transférer des informations de UTRAN vers BSS de manière transparente au réseau coeur.

4. Procédé selon la revendication 1, comportant, pour le cas d'une deuxième cellule de type GSM, au moins une étape dans laquelle une entité de réseau coeur en charge de la deuxième cellule transmet à une entité de réseau d'accès radio en charge de la deuxième cellule, dans un message de type « Handover Request » tel que défini dans le protocole BSSMAP, un élément d'information contenant une information apte à indiquer une simultanéité de services.

5. Procédé selon la revendication 4, dans lequel ledit élement d'information correspond à l'IE « Old BSS to new BSS information ».

6. Procédé selon l'une des revendications 1 à 5, dans lequel ladite information apte à indiquer une simultanéité de services est utilisée, dans une entité de réseau d'accès radio en charge de la deuxième cellule , pour décider ensuite d'un éventuel transfert vers une cellule supportant plusieurs services simultanés par utilisateur.

7. Entité de réseau d'accès radio pour réseau de radiocommunications mobiles, comportant des moyens pour mettre en oeuvre un procédé selon l'une des revendications 1 à 6.

8. Entité de réseau d'accès radio pour réseau de radiocommunications mobiles, comportant des moyens pour transmettre à une entité de réseau coeur, pour un transfert intercellulaire d'une première cellule capable de supporter un ensemble de services simultanés par utilisateur, vers une deuxième cellule capable de supporter un sous-ensemble dudit ensemble de services simultanés par utilisateur, au moins une information apte à indiquer une simultanéité de services.

9. Entité de réseau d'accès radio selon la revendication 8, comportant des moyens pour transmettre à une entité de réseau coeur, dans un message de type « Relocation Required » tel que défini dans le protocole RANAP, respectivement de type « Handover Required » tel que défini dans le protocole BSSMAP, au moins une information apte à indiquer une simultanéité de services.

10. Entité selon la revendication 9, dans lequel ladite information est transmise dans un élement d'information correspondant à l'IE « Old BSS to new BSS information » ou tout autre conteneur permettant de transférer des informations de UTRAN vers BSS de manière transparente au réseau coeur.

11. Entité de réseau coeur pour réseau de radiocommunications mobiles, comportant des moyens pour mettre en oeuvre un procédé selon l'une des revendications 1 à 6.

12. Entité de réseau coeur pour réseau de radiocommunications mobiles, comportant des moyens pour transmettre à une entité de réseau d'accès radio, pour un transfert intercellulaire d'une première cellule capable de supporter un ensemble de services simultanés par utilisateur, vers une deuxième cellule capable de supporter un sous-ensemble dudit ensemble de services simultanés par utilisateur, au moins une information apte à indiquer une simultanéité de services.

13. Entité selon la revendication 12, comportant des moyens pour transmettre à une entité de réseau d'accès radio, dans un message de type
« Handover Request » tel que défini dans le protocole BSSMAP, au moins une information apte à indiquer une simultanéité de services.

14. Entité selon la revendication 13, dans lequel ladite information est transmise dans un élement d'information correspondant à l'IE « Old BSS to new BSS information » ou tout autre conteneur permettant de transférer des informations de UTRAN vers BSS de manière transparente au réseau coeur.

15. Entité de réseau d'accès radio pour réseau de radiocommunications mobiles, comportant des moyens pour utiliser au moins une information reçue d' une entité de réseau coeur, pour un transfert intercellulaire d'une première cellule capable de supporter un ensemble de services simultanés par utilisateur, vers une deuxième cellule capable de supporter un sous-ensemble dudit ensemble de services simultanés par utilisateur, et apte à indiquer une simultanéité de services, pour décider ensuite d'un éventuel transfert intercellulaire vers une cellule apte à supporter un ensemble de services simultanés par utilisateur.

16. Système de radiocommunications mobiles, comportant au moins une entité de réseau de radiocommunications mobiles selon l'une des revendications 7 à 15.
